# EUROPÄISCHE PATENTSCHRIFT

(11) **EP 1 122 213 B1**
(45) Veröffentlichungstag und Bekanntmachung des Hinweises auf die Patenterteilung: **02.01.2004**
(21) Anmeldenummer: 01102139.1
(22) Anmeldetag: 01.02.2001
(51) Int. Cl.: C01C 1/02

(54) **Destillative Reinigung von Ammoniak**
Distillative purification of ammonia
Purification de l'ammoniac par distillation

(30) Priorität: 01.02.2000 DE 10004311
(43) Veröffentlichungstag der Anmeldung: 08.08.2001
(73) Patentinhaber: BASF AKTIENGESELLSCHAFT, 67056 Ludwigshafen (DE)
(72) Erfinder: Wostbrock, Karl-Heinz, Dr., 67591 Mörstadt (DE); Kaibel, Gerd, Dr., 68623 Lampertheim (DE); Tragut, Christian, 67157 Wachenheim (DE); Anken, Gabriele, 67245 Lambsheim (DE)
(74) Vertreter: Isenbruck, Günter, Dr.

(56) Entgegenhaltungen:
- EP-A- 0 122 367
- EP-A- 0 780 147
- WO-A-96/39265

## Beschreibung

Die Erfindung betrifft ein Verfahren und eine Destillationsapparatur zur kontinuierlich betriebenen destillativen Auftrennung von rohem Ammoniak.

In der Technik werden große Mengen an reinem Ammoniak, der vorzugsweise weniger als 3 ppm Verunreinigungen enthält, benötigt. Solcher hochreiner Ammoniak wird insbesondere für die Herstellung von Lebensmitteln, für die Eichung von Analysegeräten und insbesondere für die Halbleiterherstellung benötigt. Roher Ammoniak, welcher aus der Ammoniak-Synthese hervorgeht, weist typischerweise einen Ammoniakgehalt von ca. 99,0 bis 99,5 Gew.-% auf. Typische Verunreinigungen sind Wasser, Öl sowie Inertgase, insbesondere Methan, Wasserstoff, Stickstoff und Argon. Roher Ammoniak ist für die vorstehend genannten Anwendungen unbrauchbar.

In der WO 96/39265 ist ein Verfahren zur Gewinnung von reinem Ammoniak, ausgehend von rohem Ammoniak, beschrieben. Bei diesem Verfahren wird zunächst Ammoniak verdampft und anschließend durch ein kompliziertes Filterverfahren gereinigt. Das Verfahren ist recht aufwendig und somit insbesondere für die Herstellung größerer Mengen reinen Ammoniaks wirtschaftlich wenig attraktiv.
Prinzipiell besteht die Möglichkeit, durch ausschließlich destillative Maßnahmen aus rohem Ammoniak reinen Ammoniak zu gewinnen. Dabei muß Ammoniak von Leichtsiedem (in der Regel insbesondere Methan, Wasserstoff, Stickstoff und Argon) und von Hochsiedem (insbesondere Wasser und Öl) isoliert werden - Ammoniak ist dabei das mittelsiedende Wertprodukt. Bei der üblichen destillativen Reinigung mittelsiedender Wertprodukte von leicht- und hochsiedenden Verunreinigungen sind verschiedene Verfahrensvarianten gebräuchlich. Im einfachsten Fall wird das entsprechende Zulaufgemisch in zwei Fraktionen, in eine leichtsiedende Kopffraktion und in eine hochsiedende Sumpffraktion, zerlegt. Bei der Auftrennung von Zulaufgemischen in mehr als zwei Fraktionen - z.B. in Leichtsieder , Mittelsieder und Hochsieder - müssen nach dieser Verfahrensvariante mehrere Destillationskolonnen eingesetzt werden. Um den apparativen Aufwand zu begrenzen, setzt man bei der Auftrennung von Vielstoffgemischen, die aus mehr als zwei Komponenten bestehen, auch Kolonnen ein, die sich für die Seitenentnahme flüssiger oder gasförmiger Medien eignen. Die Anwendungsmöglichkeit von Destillationskolonnen mit Seitenabzügen ist jedoch dadurch stark eingeschränkt, daß die an den Seitenabzugsstellen entnommenen Produkte normalerweise nicht völlig rein sind. Bei Seitenentnahmen im Verstärkungsteil einer Destillationsvorrichtung, die üblicherweise in flüssiger Form erfolgen, enthalten die Seitenprodukte noch Anteile an leichtersiedenden Komponenten, die im Normalfall über Kopf abgetrennt werden. Entsprechendes gilt für Seitenentnahmen im Abtriebsteil, die meist dampfförmig erfolgen und bei denen die entnommenen Seitenprodukte noch Anteile des Hochsieders aufweisen. Bei der Verwendung solcher konventionellen Seitenabzugskolonnen werden praktisch immer verunreinigte Seitenprodukte erhalten - die Verwendung von Seitenabzugskolonnen ist daher zur Gewinnung von Reinstoffen, und daher zur Gewinnung von reinem Ammoniak, ungeeignet. Insbesondere zur Isolierung von mittelsiedenden Reinstoffen aus Vielstoffgemischen müssen somit in der Regel Kolonnenanordnungen, die aus mindestens zwei separaten Kolonnen bestehen, eingesetzt werden. Der Einsatz solcher Kolonnenanordnungen zur Gewinnung von reinem Ammoniak aus rohem Ammoniak ist aufgrund von energetischen Gründen und wegen des hohen Investitionsaufwandes wirtschaftlich wenig attraktiv.

Aufgabe der vorliegenden Erfindung ist es, ein Verfahren bereitzustellen, mit dem, ausgehend von rohem Ammoniak, reiner Ammoniak gewonnen werden kann. Der Reinheitsgrad des erhaltenen Produktes soll so hoch sein, daß dieses sich für die vorstehend genannten Einsatzzwecke eignet. Das Verfahren soll praktisch und wirtschaftlich durchführbar sein.

Die Lösung dieser Aufgabe ist ein Verfahren zur kontinuierlich betriebenen destillativen Auftrennung von rohem Ammoniak in eine Leichtsieder-, Hochsieder- und eine mittelsiedende Reinfraktion in einer entweder als Trennwandkolonne oder als System thermisch gekoppelter Destillationskolonnen ausgebildeten Destillationsapparatur, wobei die Leichtsiederfraktion im Kopf der Destillationsapparatur abgezogen wird, die mittelsiedende Reinfraktion an einem Seitenabzug anfällt und die Gasbelastung der Destillationsapparatur so begrenzt ist, daß der Betriebsdruck zwischen 2 und 30 bar beträgt und der F-Faktor einen Wert von 2,0 Pa^{0,5} nicht überschreitet.

Der F-Faktor ist ein Maß für die Belastung, die durch den Gasstrom in der Kolonne hervorgerufen wird - sozusagen ein Maß für den Impuls dieses Gases (F-Faktor: Längeneinheit pro Zeiteinheit multipliziert mit der Wurzel aus der Gesamtdichte des Gases).

Das Betreiben der Destillationsapparatur bei niedrigem F-Faktor gewährleistet die Reinheit des erhaltenen Produkts (der mittelsiedenden Reinfraktion). Der F-Faktor wird ermittelt aus dem Produkt der Gasgeschwindigkeit in [m/s] und der Quadratwurzel aus der Gasdichte in [kg/m³].

Die mittelsiedende Reinfraktion fällt an einem Seitenabzug an, welcher mit Tropfenabscheidem ausgestattet ist. Ein mit Tropfenabscheidern ausgestatteter Seitenabzug soll bedeuten, daß im Bereich vor dem Seitenabzug in der Destillationsapparatur und/oder im Seitenabzug selbst Tropfenabscheider angeordnet sind, so daß durch den Seitenabzug keine bzw. nur geringe Flüssigkeitsmengen in Form von Tropfen aus der Destillationsapparatur ausgeschleust werden können - der "Tröpfchenmitriß" durch den Seitenabzug aus der Destillationsapparatur heraus wird verhindert bzw. eingeschränkt. Falls die Destillationsapparatur mehrere Seitenabzüge aufweist, so ist zumindest ein Seitenabzug mit Tropfenabscheidern ausgestattet. Bevorzugt liegen solche Tropfenabscheider als Demisterpackungen vor.

Die Ausstattung des Seitenabzugs mit Tropfenabscheidern fördert zusätzlich die Reinheit des erhaltenen Produkts (der mittelsiedenden Reinfraktion).

Die im Kopf abgezogene Leichtsiederfraktion wird in der Regel gasförmig abgezogen.

Durch das erfindungsgemäße Verfahren kann aus rohem Ammoniak reiner Ammoniak gewonnen werden, welcher für die vorstehend genannten Einsatzzwecke geeignet ist. Außerdem ist das Verfahren praktisch durchführbar und aufgrund niedriger Investitions- und Energiekosten wirtschaftlich attraktiv. Trennwandkolonnen oder thermisch gekoppelte Destillationskolonnen stellen eine vorteilhafte Alternative zu den vorstehend genannten Destillationsverfahren dar. Der Einsatz von Trennwandkolonnen ermöglicht es, die mittelsiedende Reinfraktion aus dem rohen Ammoniak zu isolieren. Bei Trennwandkolonnen ist im mittleren Bereich eine Trennwand angebracht. Diese erstreckt sich oberhalb und unterhalb der Zulaufstelle. Auf der anderen Seite, die sich gegenüber der Zulaufstelle befindet, ist eine Seitenabzugsstelle angeordnet. Zwischen Seitenabzugsstelle und Zulaufstelle befindet sich die Trennwand. In dem Kolonnenbereich, der durch die Trennwand geteilt wird, ist eine Quervermischung von Flüssigkeit- und Brüdenstrom nicht möglich. Dadurch verringert sich bei der Auftrennung des rohen Ammoniaks die Zahl der insgesamt benötigten Destillationskolonnen. Eine Trennwandkolonne ist im Prinzip eine Vereinfachung von thermisch gekoppelten Destillationskolonnen, wobei jedoch letztere höhere Investitionskosten aufweisen. Trennwandkolonnen und thermisch gekoppelte Kolonnen bieten gegenüber der Anordnung von konventionellen Destillationskolonnen sowohl hinsichtlich des Energiebedarfs als auch der Investitionskosten Vorteile. Informationen über Trennwandkolonnen bzw. thermisch gekoppelte Destillationskolonnen sind in der EP-A 0 122 367, in der EP-B 0 126 288 und in der EP-B 0 133 510 aufgeführt.

Der Betriebsdruck in der Destillationsapparatur beträgt meist zwischen 10 und 20 bar. Der F-Faktor überschreitet in der Regel nicht einen Wert von 1,5 Pa^{0,5}, bevorzugt nicht von 1,0 Pa^{0,5}. In einer bevorzugten Ausführungsform der Erfindung werden eine Teilmenge der mittelsiedenden Reinfraktion in flüssiger Form und eine weitere Teilmenge der mittelsiedenden Reinfraktion gasförmig entnommen. Die gasförmig entnommene, mittelsiedende Reinfraktion enthält einen besonders geringen Anteil an Ionen. Meist enthält der rohe Ammoniak 97,0 bis 99,9 Gew.-%, bevorzugt 99,0 bis 99,7 Gew.-% und die mittelsiedende Reinfraktion in der Regel mindestens 99,99 Gew.-%, bevorzugt mindestens 99,999 Gew.-%, Ammoniak. In der Regel erfolgt die Entnahme der mittelsiedenden Reinfraktion standgeregelt, wobei dabei bevorzugt als Regelgröße der Flüssigkeitsstand im Sumpf verwendet wird.

Die Erfindung betrifft außerdem eine Destillationsapparatur, die entweder als Trennwandkolonne oder als System thermisch gekoppelter Destillationskolonnen ausgebildet ist, zur Durchführung des vorstehend beschriebenen Verfahrens, wobei im Kopf eine Leichtsiederfraktion abgezogen wird, oberhalb des Sumpfes und unterhalb des Kopfes ein oder mehrere Seitenabzüge für eine mittelsiedende Fraktion angeordnet ist und die Gasbelastung in der Trennwandkolonne oder in dem System thermisch gekoppelter Destillationskolonnen so begrenzt ist, daß der Betriebsdruck zwischen 2 und 30 bar und der F-Faktor maximal 2,0 Pa^{0,5}, beträgt. mindestens ein Seitenabzug ist mit Tropfenabscheidern ausgestattet. Die im Kopf abgezogene Leichtsiederfraktion wird in der Regel gasförmig abgezogen.

In der anliegenden Zeichnung sind dargestellt,
in Fig. 1 ein vereinfachtes Schema einer Trennwandkolonne sowie
in Fig. 2, in Fig. 3 und in Fig. 4 vereinfachte Schemata von Systemen thermisch gekoppelter Destillationskolonnen.

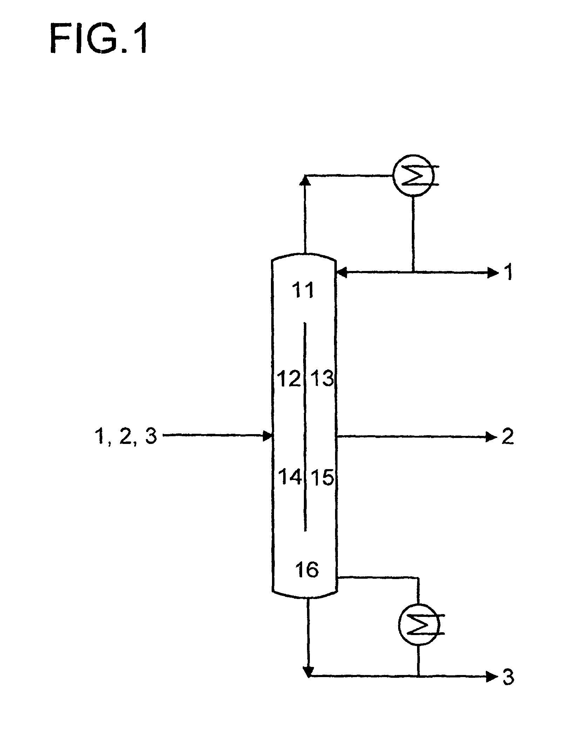

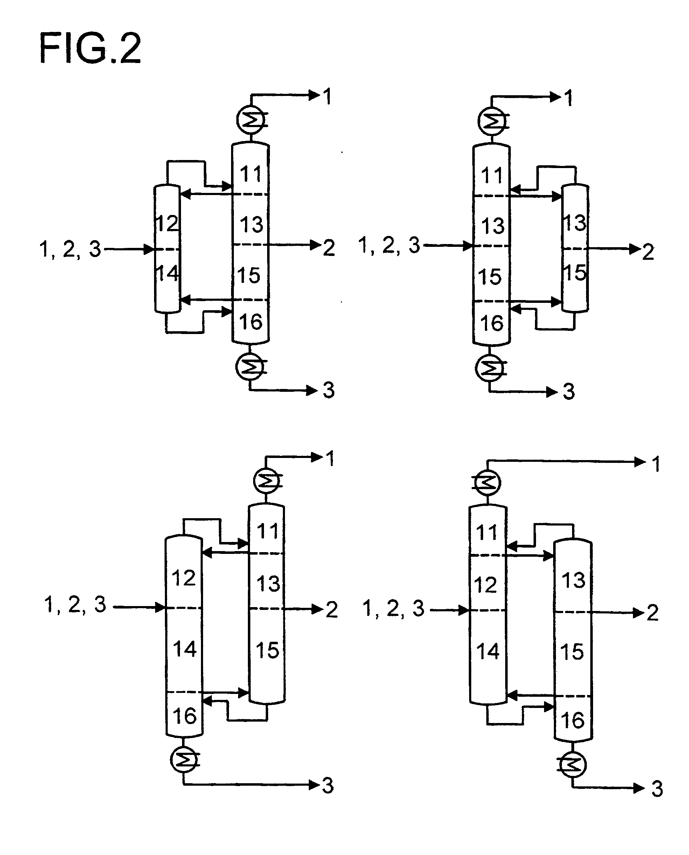

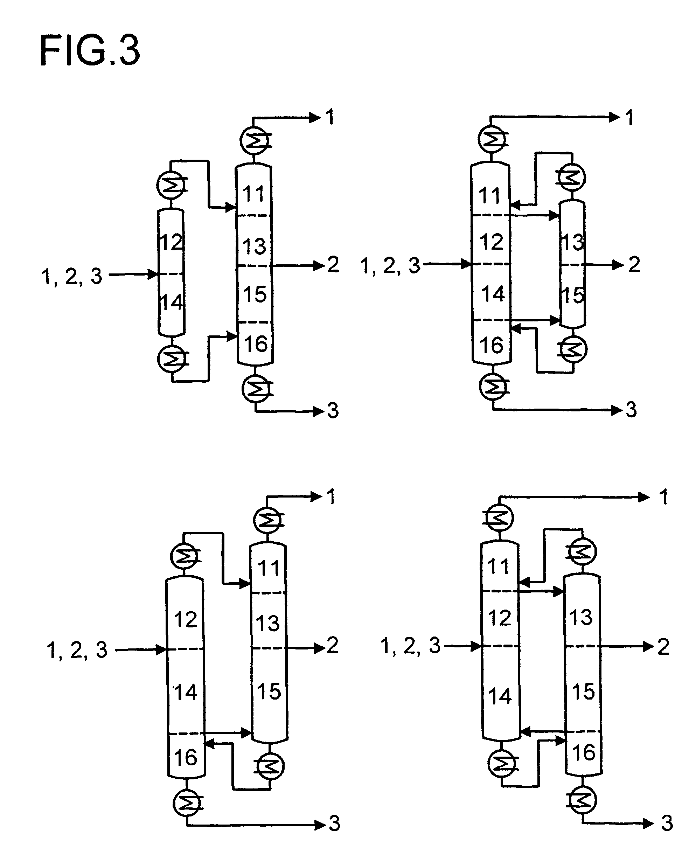

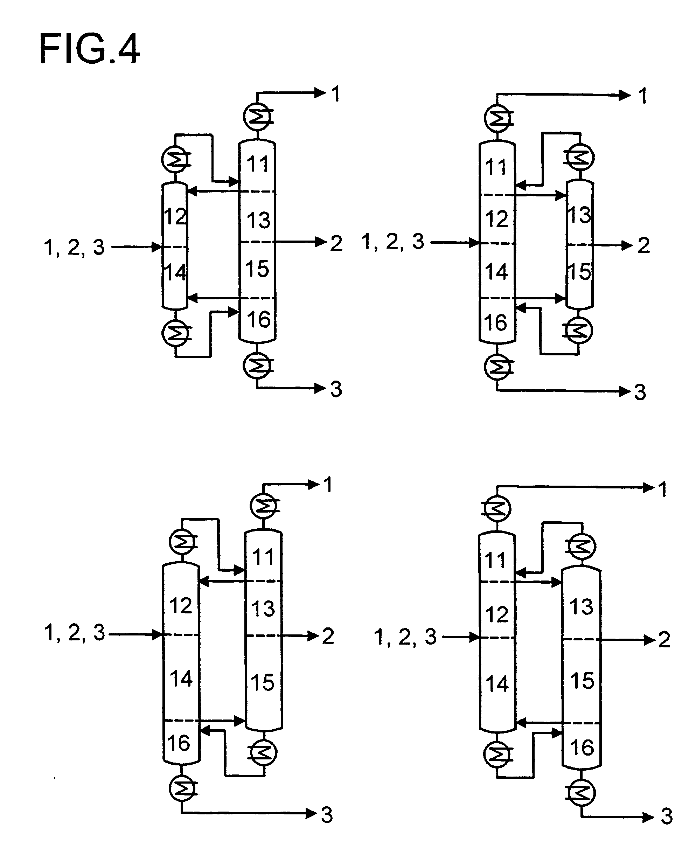

Fig. 1 bis Fig. 4 zeigen die Auftrennung von als Vielstoffgemisch vorliegendem rohen Ammoniak. Dabei entsprechen 1 den Leichtsiedern, 2 den Mittelsiedern - diese entsprechen der mittelsiedenden Reinfraktion (also reinem Ammoniak) und 3 den Hochsiedern. Die Trennwandkolonne oder thermisch gekoppelte Kolonne weist einen Zulaufteil 12, 14, eine Entnahmeteil 13, 15, einen oberen Kolonnenbereich 11 und einen unteren Kolonnenbereich 16 auf.

Wie vorstehend beschrieben, kann durch den Seitenabzug reiner Ammoniak, sowohl in flüssiger als auch in gasförmiger Form, gewonnen werden. Bei der flüssigen Entnahme wird Ammoniak mit einer besonders niedrigen Konzentration an Leichtsiedern 1 erhalten. Dies ermöglicht die Herstellung von besonders reinem Flüssigammoniak. Durch die gasförmige Entnahme wird verhindert, daß Spuren von Metallionen in das gasförmige Produkt gelangen.

Es kann sowohl beim Einsatz von Trennwandkolonnen als auch bei der Verwendung von thermisch gekoppelten Kolonnen vorteilhaft sein, den Zulaufstrom einer Vorverdampfung zu unterziehen und anschließend diesen zweiphasig - flüssig und gasförmig - oder in Form von zwei Strömen - einem gasförmigen und einem flüssigen - der Kolonne zuzuführen. Der Zulaufstrom kann also teilweise oder vollständig vorverdampft werden. Eine solche Vorverdampfung bietet sich besonders dann an, wenn der Zulaufstrom größere Mengen an Leichtsiedern 1 enthält.

Im Sumpf der Destillationsapparatur scheiden sich neben Ammoniak in der Regel als Schwersieder insbesondere Wasser und Öl ab. Das entnommene Sumpfprodukt wird meist in einem Abscheider entspannt und dadurch vom Ammoniak befreit.

Trennwandkolonnen und thermisch gekoppelte Kolonnen können sowohl als Füllkörper oder geordnete Packungen enthaltende Packungskolonnen oder als Bodenkolonnen ausgestaltet sein. In dem zugrundeliegenden Verfahren empfiehlt es sich aus Kostengründen bei Kolonnen, die einen Durchmesser von mehr als 1,2 m aufweisen, Böden, bevorzugt Ventil- oder Siebböden, einzusetzen. Die so ausgerüsteten Kolonnen sind im Bereich unterhalb des Seitenabzugs mit Demistern oder anderen Tropfenabscheidem ausgestattet. Beim Einsatz von Trennwandkolonnen können in der Regel Böden erst ab einem Kolonnendurchmesser von etwa 2 m, sinnvoll eingesetzt werden. Werden Packungskolonnen eingesetzt, so sind geordnete Gewebepackungen mit einer spezifischen Oberfläche von 300 bis 800 m²/m³, bevorzugt von 500 bis 750 m²/m³, besonders geeignet. Auch bei diesen Kolonnen empfiehlt sich die Verwendung von Demistem oder anderen Tropfenabscheidern im Bereich des Seitenabzugs.

In Kolonnenbereichen angeordnete Böden, die neben der Trennwand angeordnet sind, werden bevorzugt so angeordnet, daß die Trennwand in einem Winkel von ca. 90° zu den entsprechenden Zulauf- und Ablaufschächten der Böden steht. Eine solche Anordnung hat den Vorteil, daß die Trennwand zur Versteifung der Böden eingesetzt wird und die Träger, die für die Abstützung der Böden vorgesehen sind, leichter ausgeführt werden können. Meist werden die Träger parallel zur Trennwand angeordnet, um ein vorzeitiges Fluten der Kolonne zu vermeiden.

Die Gesamtzahl der Trennstufen beträgt in der Regel etwa 20 bis 60, bevorzugt 25 bis 30.

Der obere Kolonnenbereich 11 der Destillationsapparatur weist in der Regel 5 bis 30 %, bevorzugt 10 bis 25 %, der Verstärkungsteil 12 des Zulaufteils 12, 14 5 bis 50 %, bevorzugt 25 bis 40 %, der Abtriebsteil 14 des Zulaufteils 12, 14 5 bis 50 %, bevorzugt 25 bis 40 %, der Abtriebsteil 15 des Entnahmeteils 13, 15 5 bis 50 %, bevorzugt 25 bis 40 %, der Verstärkungsteil 13 des Entnahmeteils 13, 15 5 bis 50 %, bevorzugt 25 bis 40 % und der untere Kolonnenbereich 16 5 bis 30 %, bevorzugt 10 bis 25 %, der Gesamtzahl der Trennstufen der Destillationsapparatur auf. Meist beträgt die Summe der Trennstufen der Teilbereiche 12 und 14 des Zulaufteils 12, 14 80 bis 120 %, bevorzugt 90 bis 110 % der Summe der Trennstufen der Teilbereiche 13 und 15 im Entnahmeteil 13, 15.

In einer bevorzugten Ausführungsform der Erfindung weist die Trennwandkolonne am oberen und unteren Ende der Trennwand Probeentnahmemöglichkeiten auf Durch diese können aus der Kolonne kontinuierlich oder in zeitlichen Abständen in flüssiger oder gasförmiger Form Proben entnommen und hinsichtlich ihrer Zusammensetzung untersucht werden.

Für die Regelung von Trennwandkolonnen und thermisch gekoppelten Kolonnen werden allgemein verschiedene Regelungsstrategien beschrieben. Entsprechende Beschreibungen finden sich in der US-A 4,230,533, in der DE-C 35 22 234, in der EP-A 0 780 147 und in der Zeitschrift "process engineering", 2 (1993) 33 bis 34.

Für die Regelung des erfindungsgemäßen Verfahrens erweist sich ein hiervon abweichendes Regelungskonzept als besonders günstig. Dieses ist besonders darauf ausgelegt, daß der Druck und die Temperatur im gesamten Innenbereich der erfindungsgemäßen Destillationsapparatur nur gering variieren. Wesentlich an dem Regelungskonzept sind:
- Eine Mengenregelung für den Kopfabzug der Destillationsapparatur, die als Stellgröße die Kühlwassermenge des entsprechenden, im Kopf angeordneten Kondensators nutzt (der Kopfabzug erfolgt mengengeregelt);
- eine Temperaturregelung im unteren Kolonnenbereich 16, die als Stellgröße die Sumpfentnahmemenge nutzt; die Entnahme des Sumpfproduktes erfolgt somit temperaturgeregelt, wobei als Regeltemperatur eine Temperatur verwendet wird, die entweder durch eine Meßstelle im unteren Kolonnenbereich 16, oder im Sumpf, aufgenommen wird;
- eine Standregelung am Kolonnensumpf, die als Stellgröße die Seitenentnahmemenge nutzt;
- eine Regelung für den Differenzdruck über der Kolonne, wobei die Regelung als Stellgröße die Heizdampfmenge bzw. den Heizdampfdruck des Sumpfverdampfers der Destillationsapparatur nutzt.

In der Regel wird die Flüssigkeit auf den Zulaufteil 12, 14 mit Hilfe einer Pumpe gefördert oder über eine statische Zulaufhöhe von mindestens ca. 1 m mengengeregelt aufgegeben. Die Regelung wird bevorzugt so eingestellt, daß die auf den Zulaufteil aufgegebene Flüssigkeitsmenge nicht unter 30 % des "Normalwertes" (als Normalwert soll die Menge angesehen werden, die bei dem entsprechenden kontinuierlichen Verfahren im zeitlichen Mittel pro Zeiteinheit an einer bestimmten Stelle anfällt) sinken kann. Bevorzugt wird die Aufteilung der aus dem Teilbereich 13 im Entnahmeteil 13, 15 ablaufenden Flüssigkeit auf den Seitenabzug und auf den Teilbereich 15 im Entnahmeteil 13, 15 durch eine Regelung so eingestellt, daß die auf den Teilbereich 15 aufgegebene Flüssigkeitsmenge nicht unter 30 % des "Normalwertes" sinken kann.

Bei der Trennung von Vielstoffgemischen in eine Leichtsieder-, Mittelsieder- und Hochsiederfraktion existieren üblicherweise Spezifikationen über den maximal zulässigen Anteil an Leichtsiedem 1 und Hochsiedem 3 in der Mittelsiederfraktion. Dabei werden entweder einzelne für das Trennproblem kritische Komponenten, sogenannte Schlüsselkomponenten, oder die Summe von mehreren Schlüsselkomponenten spezifiziert. Die Einhaltung dieser Spezifikation für die Hochsieder 3 in der Mittelsiederfraktion (also in der mittelsiedenden Reinfraktion) wird bevorzugt über das Aufteilungsverhältnis der Flüssigkeit am oberen Ende der Trennwand geregelt.

In der Regel wird die aus dem oberen Kolonnenbereich 11 ablaufende Flüssigkeit in einem in der Kolonne oder außerhalb der Kolonne angordneten Auffangraum gesammelt und gezielt durch eine Festeinstellung oder Regelung am oberen Ende der Trennwand so aufgeteilt, daß das Verhältnis des Flüssigkeitsstromes zum Zulaufteil 12, 14 zu dem zum Entnahmeteil 13, 15 0,1 bis 1,0, bevorzugt 0,6 bis 0,9, beträgt. Die Brüdenmenge wird meist am unteren Ende der Trennwand durch Wahl der Trenneinbauten und/oder den zusätzlichen Einbau Druckverlust erzeugender Einbauten, beispielsweise von Blenden, so eingestellt, daß das Mengenverhältnis des Brüdenstroms im Zulaufteil 12, 14 zu dem im Entnahmeteil 13, 15 0,8 bis 1,2, bevorzugt 0,9 bis 1,1, beträgt.

Die Spezifikation für die Leichtsieder 1 in der mittelsiedenden Reinfraktion wird bevorzugt durch die Heizleistung geregelt.

Zur Entnahme und Aufteilung der Flüssigkeiten am oberen Ende der Trennwand und an der Seitenentnahmestelle eignen sich sowohl innen liegende als auch außerhalb der Kolonne angeordnete Auffangräume für die Flüssigkeit, welche die Funktion einer Pumpenvorlage übernehmen. Bei Bodenkolonnen ist es besonders günstig, hierzu den Ablaufschacht auf etwa das 2- bis 3-fache der üblichen Höhe zu vergrößern und in dem Ablaufschacht die entsprechende Flüssigkeitsmenge zu speichern. Bei der Verwendung von gepackten Kolonnen wird die Flüssigkeit zunächst in Sammlern gefaßt und von dort aus in einen innen liegenden oder außen liegenden Auffangraum geleitet. Bei kleineren Flüssigkeitsdurchsätzen bis zu 10 m³/h bieten Schwenktrichter eine kostengünstige Alternative.

Anstelle einer Trennwandkolonne kann erfindungsgemäß auch eine Zusammenschaltung von zwei Destillationskolonnen in Form einer thermischen Kopplung - ein System thermisch gekoppelter Destillationskolonnen - eingesetzt werden. Dabei sind in der Regel beide der thermisch gekoppelten Destillationskolonnen mit jeweils einem eigenen Verdampfer und einem Kondensator ausgestattet. Ein System thermisch gekoppelter Destillationskolonnen kann bei entsprechenden zur Verfügung stehenden Destillationskolonnen eine sinnvolle Alternative zu Trennwandkolonnen sein. Es ist praktikabel, Schaltungsformen auszuwählen, die es ermöglichen, daß ausschließlich flüssige Verbindungsströme zwischen den einzelnen Destillationskolonnen auftreten. Diese speziellen Verschaltungen bieten den Vorteil, daß die beiden Destillationskolonnen unter verschiedenen Drücken betrieben werden können, mit dem Vorteil, daß diese sich besser an die Temperaturniveaus vorhandener Heiz- und Kühlmedien anpassen lassen.

## Patentansprüche

1. Verfahren zur kontinuierlich betriebenen destillativen Auftrennung von rohem Ammoniak in eine Leichtsieder, Hochsieder- und eine mittelsiedende Reinfraktion in einer entweder als Trennwandkolonne oder als System thermisch gekoppelter Destillationskolonnen ausgebildeten Destillationsapparatur, wobei die Leichtsiederfraktion im Kopf der Destillationsapparatur gasförmig abgezogen wird, die mittelsiedende Reinfraktion an einem Seitenabzug anfällt und die Gasbelastung der Destillationsapparatur so begrenzt ist, dass der Betriebsdruck zwischen 2 und 30 bar beträgt und der F-Faktor von 2,0 Pa^{0,5} nicht überschreitet.

2. Verfahren nach Anspruch 1, **dadurch gekennzeichnet, dass** der Betriebsdruck zwischen 10 und 20 bar beträgt.

3. Verfahren nach Anspruch 1 oder 2, **dadurch gekennzeichnet, dass** der F-Faktor einen Wert von 1,5 Pa^{0,5}, bevorzugt von 1,0 Pa^{0,5}, nicht überschreitet.

4. Verfahren nach einem der Ansprüche 1 bis 3, **dadurch gekennzeichnet, dass** die mittelsiedende Reinfraktion an einem Seitenabzug anfällt, welcher mit Tropfenabscheidern ausgestattet ist.

5. Verfahren nach Anspruch 4, **dadurch gekennzeichnet, dass** die Tropfenabscheider in Form von Demisterpackungen vorliegen.

6. Verfahren nach einem der Ansprüche 1 bis 5, **dadurch gekennzeichnet, dass** eine Teilmenge der mittelsiedenden Reinfraktion in flüssiger Form und eine weitere Teilmenge der mittelsiedenden Reinfraktion gasförmig entnommen wird.

7. Verfahren nach einem der Ansprüche 1 bis 6, **dadurch gekennzeichnet, dass** der rohe Ammoniak 95,0 bis 99,9 Gew.-%, bevorzugt 99,0 bis 99,7 Gew.-% und die mittelsiedende Reinfraktion mindestens 99,99 Gew.-%, bevorzugt mindestens 99,999 Gew.-%, Ammoniak enthält.

8. Verfahren nach einem der Ansprüche 1 bis 7, **dadurch gekennzeichnet, dass** die Entnahme der mittelsiedenden Reinfraktion standgeregelt erfolgt und dabei bevorzugt als Regelgröße der Flüssigkeitsstand im Sumpf verwendet wird.

9. Destillationsapparatur, die entweder als Trennwandkolonne oder als System thermisch gekoppelter Destillationskolonnen ausgebildet ist, zur Durchführung des Verfahrens gemäß einem der Ansprüche 1 bis 8, wobei im Kopf eine Leichtsiederfraktion gasförmig abgezogen wird, oberhalb des Sumpfes und unterhalb des Kopfes ein oder mehrere Seitenabzüge für eine mittelsiedende Fraktion angeordnet sind, mindestens ein Seitenabzug mit Tropfenabscheidern ausgestattet ist, insbesondere in Form von Demisterpackungen und die Gasbelastung in der Trennwandkolonne oder in dem System thermisch gekoppelter Destillationskolonnen so begrenzt ist, dass der Betriebsdruck zwischen 10 und 30 bar und der F-Faktor maximal 2,0 Pa^{0,5}, beträgt.

## Claims

1. A process for the continuously operated fractional distillation of crude ammonia to give a low boiler fraction, a high boiler fraction and an intermediate-boiling pure fraction in a distillation apparatus configured either as a dividing wall column or as a system of thermally coupled distillation columns, wherein the low boiler fraction is taken off at the top of the distillation apparatus, the intermediate-boiling pure fraction is obtained at a side offtake and the gas loading of the distillation column is restricted so that the operating pressure is in the range from 2 to 30 bar and the F factor does not exceed 2.0 Pa^{0.5}.

2. A process as claimed in claim 1, wherein the operating pressure is in the range from 10 to 20 bar.

3. A process as claimed in claim 1 or 2, wherein the F factor does not exceed 1.5 Pa^{0.5}, preferably does not exceed 1.0 Pa^{0.5}.

4. A process as claimed in any of claims 1 to 3, wherein the intermediate-boiling pure fraction is obtained at a side offtake which is provided with droplet precipitators.

5. A process as claimed in claim 4, wherein droplet precipitators in the form of demister packing are present.

6. A process as claimed in any of claims 1 to 5 wherein part of the intermediate-boiling pure fraction is taken off in liquid form and a further part of the intermediate-boiling pure fraction is taken off in gaseous form.

7. A process as claimed in any of claims 1 to 6, wherein the crude ammonia contains from 95.0 to 99.9% by weight, preferably from 99.0 to 99.7% by weight, of ammonia and the intermediate-boiling pure fraction comprises at least 99.99% by weight, preferably at least 99.999% by weight, of ammonia.

8. A process as claimed in any of claims 1 to 7, wherein the intermediate-boiling pure fraction is taken off under level control and the control parameter used is preferably the liquid level at the bottom of the column.

9. A distillation apparatus configured either as a dividing wall column or as a system of thermally coupled distillation columns for carrying out the process as claimed in any of claims 1 to 8, wherein the low boiler fraction is taken off in gaseous form at the top of the distillation apparatus, the intermediate-boiling pure fraction is obtained at one or more side offtakes, at least one side offtake is provided with droplet precipitators, in particular in the form of demister packing, and the gas loading of the distillation column is restricted so that the operating pressure is in the range from 2 to 30 bar and the F factor does not exceed 2.0 Pa^{0.5}.

## Revendications

1. Procédé à exploitation continue pour la séparation de l'ammoniac brut par distillation, en une fraction pure à bas point d'ébullition, à point d'ébullition élevé et à point d'ébullition moyen, dans un appareillage de distillation conçu soit sous forme de colonne à cloison de séparation ou sous forme de système de colonnes de distillations à couplage thermique, la fraction pure à point d'ébullition bas étant extraite sous forme gazeuse en tête de l'appareillage de distillation, la fraction pure à point d'ébullition moyen se produisant à une aspiration latérale et la charge gazeuse de l'appareillage de distillation étant limitée de manière à ce que la pression de service se situe entre 2 et 30 bars et le coefficient F ne dépasse pas une valeur de 2,0 Pa^{0,5}.

2. Procédé selon la revendication 1, **caractérisé en ce que** la pression de service se situe entre 10 et 20 bars.

3. Procédé selon l'une quelconque des revendications 1 ou 2, **caractérisé en ce que** le coefficient F ne dépasse pas une valeur de 1,5 Pa^{0,5}, de préférence de 1,0 Pa^{0,5}.

4. Procédé selon l'une quelconque des revendications 1 à 3, **caractérisé en ce que** la fraction pure à point d'ébullition moyen se produit à une aspiration latérale, qui est équipée de pare-gouttes.

5. Procédé selon la revendication 4, **caractérisé en ce que** les pare-gouttes sont présents sous forme de dispositifs anti-buée.

6. Procédé selon l'une quelconque des revendications 1 à 5, **caractérisé en ce qu'**une quantité partielle de la fraction pure à point d'ébullition moyen est prélevée sous forme liquide et une autre quantité partielle de la fraction pure à point d'ébullition moyen est prélevée sous forme gazeuse.

7. Procédé selon l'une quelconque des revendications 1 à 6, **caractérisé en ce que** l'ammoniac brut contient de 95,0 à 99,9 % en poids, de préférence de 99,0 à 99,7 % en poids et la fraction pure à point d'ébullition moyen contient au moins 99,99 % en poids, de préférence au moins 99,999 % en poids d'ammoniac.

8. Procédé selon l'une quelconque des revendications 1 à 7, **caractérisé en ce que** le prélèvement de la fraction pure à point d'ébullition moyen est réalisé à un niveau réglé, le niveau de liquide dans le pied de colonne étant utilisé de préférence en tant que dimension de régulation.

9. Appareillage de distillation, conçu soit sous forme de colonne à paroi de séparation ou sous forme de système de colonnes de distillation à couplage thermique, pour la réalisation du procédé selon l'une quelconque des revendications 1 à 8, une fraction à point d'ébullition bas étant prélevée en tête sous forme gazeuse, une ou plusieurs aspirations latérales pour une fraction à point d'ébullition moyen étant disposée(s) au-dessus du pied et en dessous de la tête de colonne, au moins l'une des aspirations latérales étant équipée de pare-gouttes, notamment sous forme de dispositifs anti-buée et la charge gazeuse dans la colonne à paroi de séparation ou dans le système de colonnes de distillation à couplage thermique étant limitée de manière à ce que la pression de service se situe entre 10 et 30 bars et le coefficient F s'élève au maximum à 2,0 Pa ^{0,5}.
